# EUROPÄISCHE PATENTSCHRIFT

(11) **EP 1 230 755 B1**
(45) Veröffentlichungstag und Bekanntmachung des Hinweises auf die Patenterteilung: **04.01.2006**
(21) Anmeldenummer: 00972630.8
(22) Anmeldetag: 11.10.2000
(51) Int. Cl.: H04H 1/00, G11B 31/00, H04B 1/20

(54) **VORRICHTUNG ZUR WIEDERGABE UND/ODER AUFNAHME MIT EINEM DIGITALEN TONTRÄGER UND ZUM EMPFANGEN VON DIGITALEN RUNDFUNKSIGNALEN**
DEVICE FOR PLAYING BACK AND/OR RECORDING USING A DIGITAL SOUND CARRIER AND FOR RECEIVING DIGITAL RADIO BROADCAST SIGNALS
DISPOSITIF DE LECTURE ET/OU D'ENREGISTREMENT A L'AIDE D'UN SUPPORT DE SON NUMERIQUE, ET DE RECEPTION DE SIGNAUX RADIO NUMERIQUES

(30) Priorität: 09.11.1999 DE 19953791
(43) Veröffentlichungstag der Anmeldung: 14.08.2002
(73) Patentinhaber: ROBERT BOSCH GMBH, 70442 Stuttgart (DE)
(72) Erfinder: BOENKE, Bjoern, 31139 Hildesheim (DE)
(86) Internationale Anmeldenummer: PCT/DE2000/003564
(87) Internationale Veröffentlichungsnummer: WO 2001/035554

(56) Entgegenhaltungen:
- EP-A- 0 905 931
- DE-A- 19 725 898
- DE-C- 19 735 545
- LAAR VAN DE F ET AL: "TOWARDS THE NEXT GENERATION OF DAB RECEIVERS" EBU REVIEW- TECHNICAL,BE,EUROPEAN BROADCASTING UNION. BRUSSELS, Nr. 272, 21. Juni 1997 (1997-06-21), Seiten 46-59, XP000720136 ISSN: 0251-0936
- MULLER-ROMER F: "NACHFOLGE FUR DEN UKW-HORFUNK" FUNKSCHAU,DE,FRANZIS-VERLAG K.G. MUNCHEN, Bd. 62, Nr. 8, 6. April 1990 (1990-04-06), Seiten 9-10,12-13, XP000113264 ISSN: 0016-2841

## Beschreibung

### Stand der Technik

Die Erfindung geht aus von einer Vorrichtung zur Wiedergabe und/oder Aufnahme mit einem digitalen Tonträger und zum Empfang von digitalen Rundfunksignalen nach der Gattung des unabhängigen Patentanspruchs.

Es ist bereits bekannt, daß ein CD (Compact Disk)-Wechsler eine vom Autoradio, also der Bedien- und Darstellungseinrichtung, abgesetzte Einheit ist. Dies rührt insbesondere von der Größe des CD-Wechslers her. Daher wird der CD-Wechsler üblicherweise im Kofferraum eines Personenkraftwagens eingebaut. Auch ein Minidisc-Wechsler ist eine vom Autoradio abgesetzte Einheit. Darüber hinaus sind auch DAB (Digital Audio Broadcasting) Empfänger oft eine vom Autoradio abgesetzte Box. Der Grund für die Trennung des CD- und Minidisc-Wechslers und der DAB-Box von der Bedien- und Darstellungseinrichtung, also dem Autoradio, ist also zu einem die Größe der Wechsler und zum anderen, daß im Autoradio bisher UKW und/oder MW standardmäßig als nutzbare Rundfunkübertragungsverfahren im Autoradio verfügbar sind, während DAB meist eine zusätzliche Option zum Empfang von digitalen Rundfunksignalen darstellt.

Aus Laar et al.: Towards the next generation of DAB receivers EBU Review-Technical, BE, European Broadcasting Union Brüssel Nr. 272, 21. Juni 1997, Seiten 46 bis 59 geht hervor, einen DAB-Empfänger mit einem CD-Changer zu kombinieren.

### Vorteile der Erfindung

Die erfindungsgemäße Vorrichtung mit den Merkmalen des unabhängigen Patentanspruchs hat demgegenüber den Vorteil, daß eine Kombination von z.B. einem CD- oder einem Minidisc-Wechsler, also einem Wechsler für digitalen Tonträger, mit einem Rundfunkempfänger für digitale Rundfunksignale kombiniert wird. Das hat den Vorteil, daß das gemeinsame Gehäuse kleiner ist als die Gehäuse von zwei getrennten Einheiten. Es wird also an Volumen und Kosten eingespart. Darüber hinaus wird Bauraum im Kraftfahrzeug eingespart. Da nun zwei Geräte in einer Box zusammengefaßt sind, wird darüber hinaus auch Verkabelung eingespart.

Darüber hinaus können weitere Synergien durch die Verwendung von gleichen Baugruppen genutzt werden. So werden z.B. ein Steuerungselement, ein Digital-Analog-Wandler für Audio und ein Netzteil sowohl von einem CD-Wechsler als auch vom DAB-Empfänger genutzt. Die Folge sind große Kostenvorteile durch eine Einsparung von Baugruppen.

Durch die in den abhängigen Ansprüchen aufgeführten Maßnahmen sind vorteilhafte Weiterbildungen und Verbesserungen der im unabhängigen Patentanspruch angegebenen Vorrichtung zur Wiedergabe und/oder Aufnahme mit einem digitalen Tonträger und zum Empfang von digitalen Rundfunksignalen möglich.

Besonders vorteilhaft ist, daß der Digital-Analog-Wandler für Audio-Datenströme, die vom Rundfunkempfänger für digitale Rundfunksignale und von dem digitalen Tonträgerlaufwerk kommen, sich im gemeinsamen Gehäuse des Laufwerks für digitale Tonträger als auch des Rundfunkempfängers befindet. Dadurch ist weder in der Bedien- und Darstellungseinrichtung noch anderswo im analogen Audio-Signalpfad eine Quellenumschaltung mit dem damit verbundenen Qualitätsverlust notwendig, da vor dem gemeinsamen Digital-Analog-Wandler die digitalen Datenströme ohne Qualitätsverlust umgeschaltet werden.

Weiterhin ist von Vorteil, daß in einer Weiterbildung der Erfindung der Digital-Analog-Wandler sich in der Bedien- und Darstellungseinrichtung befindet. Die hier notwendige digitale Übertragung des Audio-Datenstroms ist störungssicher und ermöglicht eine höhere Qualität des Audiosignals bei der Bedien- und Darstellungseinrichtung.

Darüber hinaus ist von Vorteil, daß mit der erfindungsgemäßen Vorrichtung mittels des Laufwerks für den digitalen Tonträger Aufnahmen von Rundfunkprogrammen, die die digitalen Rundfunksignale aufweisen, ermöglicht werden. Dadurch werden hochqualitative Mitschnitte von Rundfunksendungen auf eine einfache Weise ermöglicht. Das steigert erheblich den Nutzen der erfindungsgemäßen Vorrichtung.

In einer vorteilhaften Verbesserung weist das Gehäuse der erfindungsgemäßen Vorrichtung eine Schnittstelle für einen Datenausgang auf und zwar für Daten, die in den digitalen Rundfunksignalen, wie z.B. DAB, enthalten sind. Über diese Schnittstelle können vorteilhafterweise dann diese Daten zur Bedien- und Darstellungseinrichtung, zu einem separaten Daten-Dekoder oder anderen Komponenten geleitet werden, um dort z.B. für Multimediaanwendungen wie eine dynamische Navigation genutzt zu werden.

Weiterhin ist von Vorteil, daß ein Netzteil, das sich im Gehäuse der erfindungsgemäßen Vorrichtung befindet, alle Komponenten der Vorrichtung mit elektrischer Energie versorgt. Dadurch wird der Aufbau der erfindungsgemäßen Vorrichtung billiger.

Weiterhin ist von Vorteil, daß über einen Prozessor des Rundfunkempfängers die Empfangsfrequenzbereiche steuerbar sind. Damit wird es ermöglicht, daß ein Benutzer mittels einer Eingabe an der Bedien- und Darstellungseinrichtung einen Sender auswählt, wobei dies einem Empfangsfrequenzbereich entspricht und dem Prozessor des Rundfunkempfängers mittels des Steuerelements mitgeteilt wird, so daß dieser ein Empfangsteil des Rundfunkempfängers entsprechend einstellt.

Darüber hinaus ist es von Vorteil, daß in einer Weiterbildung der Erfindung die erfindungsgemäße Vorrichtung an einen Bus angeschlossen ist, so daß weitere an den Bus angeschlossene Komponenten Daten von der erfindungsgemäßen Vorrichtung abrufen können.

### Zeichnung

Ausführungsbeispiele der Erfindung sind in der Zeichnung dargestellt und in der nachfolgenden Beschreibung näher erläutert.

Es zeigen
Figur 1 einen CD-Wechsler mit DAB-Empfänger, wobei der Digital-Analog-Wandler sich im Gehäuse der erfindungsgemäßen Vorrichtung befindet,
Figur 2 einen CD-Wechsler mit DAB-Empfänger, wobei sich der Digital-Analog-Wandler in der Bedien- und Darstellungseinrichtung befindet, und
Figur 3 eine erfindungsgemäße Vorrichtung, die an einen Bus angeschlossen ist.

### Beschreibung der Ausführungsbeispiele

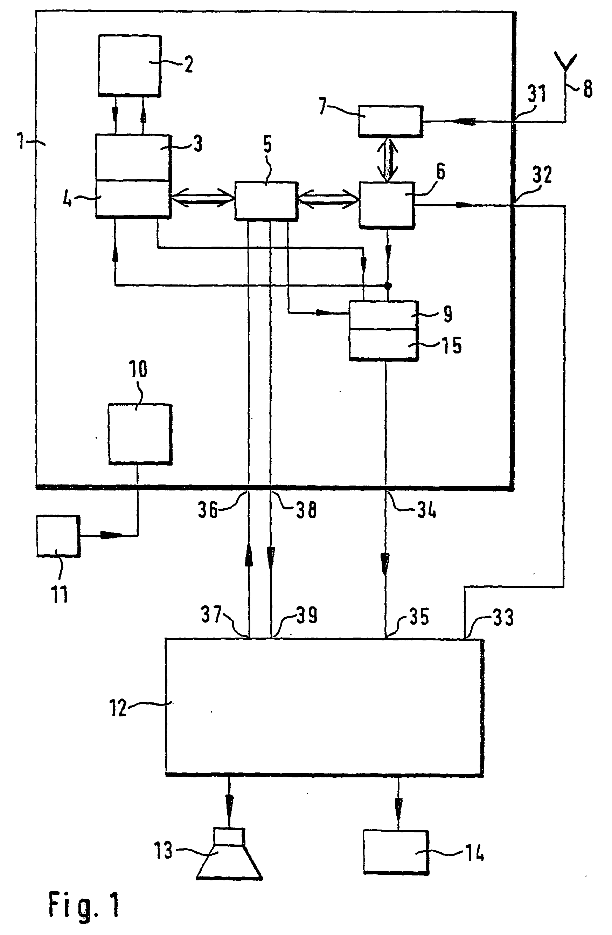

In der Figur 1 ist ein CD-Wechsler mit einem DAB-Empfänger dargestellt. Die erfindungsgemäße Vorrichtung 1 weist ein CD-Magazin 2, ein CD-Laufwerk 3, eine CD-Laufwerksteuerung 4, ein Steuerelement 5, einen Prozessor 6, ein Hochfrequenzempfangsteil 7, einen Multiplexer 9, einen Digital-Analog-Wandler 15 und ein Netzteil 10 auf. Das Steuerelement 5 ist als ein Mikrocontroller ausgeführt. Der Prozessor 6 weist neben einem Mikroprozessor oder einem Signalprozessor Speicher und angeschlossene Elektronik auf.

Die Vorrichtung 1 ist über einen Hochfrequenzeingang 31 mit einer Antenne 8 verbunden. Die Vorrichtung 1 weist einen Digitalausgang 32 auf, der zu einem Digitaleingang 33 einer Bedien und Darstellungseinrichtung 12, hier ein Autoradio, führt. Weiterhin weist die erfindungsgemäße Vorrichtung einen Ausgang 34 für analoge Audio-Signale auf, der zu einem Analogeingang 35 der Bedien- und Darstellungseinrichtung 12 führt. Weiterhin weist die Vorrichtung 1 einen Steuersignaleingang 36 auf, der mit einem Steuersignalausgang 37 der Bedien und Darstellungseinrichtung 12 verbunden ist. Über einen Ausgang für Zustandssignale 38 teilt die Vorrichtung 1 der Bedien- und Darstellungseinrichtung 12 über einen Zustandssignaleingang 39 mit in welchem Zustand sich das CD-Laifwerk und der DAB-Empfänger befinden. So wird zum Beispiel der Bedien- und Darstellungseinrichtung mitgeteilt, ob eine CD in das CD-Laufwerk 3 transportiert wurde und ob die CD von dem Laufwerk erkannt wurde. Schließlich weist die Vorrichtung einen Eingang auf, über den ein Generator 11 an das Netzteil 10 in der Vorrichtung elektrische Energie liefert.

In dem CD-Magazin 2 sind verschiedene CDs von dem Benutzer der erfindungsgemäßen Vorrichtung gelagert. Damit wird es dem Benutzer ermöglicht, z.B. während einer längeren Autofahrt Musikstücke aus mehreren CDs auszuwählen. Von dem CD-Laufwerk 3 und der CD-Laufwerktsteuerung 4 erhält das CD-Magazin 2 ein Signal, welche CD zu wählen ist. Bekanntermaßen wird dann mit einem Aufzugssystem die entsprechende CD aus dem CD-Magazin 2 entnommen und an das Laufwerk 3 übergeben. Die mit dem Laufwerk 3 verbundene CD-Laufwerksteuerung 4 steuert das Abspielen der sich im CD-Laufwerk 3 befindenden CD. Die CD-Laufwerksteuerung 4 wird mittels des Steuerelements 5 gesteuert. Dazu ist das Steuerelement 5 über Ein- und Ausgänge mit der Bedien- und Darstellungseinrichtung 12 verbunden, an der der Nutzer seine Eingaben macht. Alternativ liegt ein Steuerbus vor, über den die Steuersignale ausgetauscht werden.

Über einen zweiten Ausgang ist die CD-Laufwerksteuerung 4 mit dem Multiplexer 9 verbunden. Die CD-Laufwerksteuerung 4 liefert über diesen zweiten Ausgang an den Multiplexer 9 den von der CD ausgelesenen Datenstrom. Das Steuerelement 5 ist über einen dritten Ausgang mit einem Steuereingang des Multiplexers 9 verbunden. Über diesen Steuereingang des Multiplexers 9 wählt das Steuerelement 5 aus, ob der Datenstrom, der von der CD-Laufwerksteuerung 4 zum dem Multiplexer 9 führt, weitergeschaltet wird, um im an den Multiplexer 9 angeschlossenen Digital-Analog-Wandler 15 in analoge Signale umgewandelt zu werden. An dem zweiten Dateneingang des Multiplexers 9 ist der erste Datenausgang des Prozessors 6 angeschlossen. Über den ersten Datenausgang des Prozessors 6 werden die decodierten, empfangenen digitalen Rundfunksignale versendet. Damit wählt das Steuerelement 5 an dem Multiplexer 9 also entweder den Datenstrom, der von der CD-Laufwerksteuerung 4 oder von dem Prozessor 6 kommt.

Von dem ersten Datenausgang des Prozessors 6 führt eine Verbindung zu einem Dateneingang der Laufwerkssteuerung 4, so daß empfangene DAB-Rundfunksignale auf eine CD mittels des CD-Laufwerks 3 geschrieben werden können.

DAB ist ein digitales Rundfunkübertragungssystem, das aufgrund der Verwendung des orthogonalen Frequenzmultiplexes (engl. Orthogonal Frequency Division Multiplex) hervorragend für den mobilen Empfang in zum Beispiel Personenkraftwagen geeignet ist. Bei OFDM werden die zu übertragenen Funksignale auf eine Vielzahl von Unterträgern, die sich auf verschiedenen Frequenzen befinden, verteilt, so daß sich eine frequenzselektive Dämpfung kaum negativ auf die Qualität der empfangenen Rundfunksignale auswirkt. Da sich die auf die Unterträger verteilten Funksignale gegenseitig nicht stören, wird dieses Verhalten mit orthogonal bezeichnet. Die Rahmenstruktur von DAB bietet weitgehende Möglichkeiten, neben Audioprogrammen die ganze Vielfalt von Multimediadaten zu übertragen.

Der Prozessor 6 ist über einen zweiten Datenausgang und Dateneingang mit dem Steuerelement 5 verbunden, so daß über diese Verbindung der Prozessor 6 und damit der Rundfunkempfänger für digitale Rundfunksignale durch den Benutzer über die Bedien- und Darstellungseinrichtung 12 gesteuert wird. Der Prozessor 6 ist weiterhin mit einem Hochfrequenzempfangsteil 7 verbunden, wobei Steuerinformationen, um z. B. die gewünschte Empfangsfrequenz einzustellen, und die Rundfunksignale übertragen werden. Das Hochfrequenzempfangsteil 7 ist an eine Antenne 8 angeschlossen, mittels derer die Rundfunksignale empfangen werden. Die empfangenen Rundfunksignale werden dann in dem Hochfrequenzempfangsteil 7 verstärkt, umgesetzt und digitalisiert und dann an den Prozessor 6 übergeben. Alternativ ist ein Analog-Digital-Wandler, der die Digitalisierung der empfangenen Rundfunksignale durchführt, bei dem Prozessor 6 plaziert, so daß von der Hochfrequenzempfangsteil 7 dann analoge Signale in einer Zwischenfrequenz von dem Hochfrequenzempfangsteil 7 zu dem Prozessor 6 gelangen.

Der Prozessor 6 hat über einen vierten Datenausgang eine Verbindung über den Digitalausgang 32 der Vorrichtung 1 zu dem Digitaleingang 33 der Bedien- und Darstellungseinrichtung 12. Mittels dieser Verbindung ist es dem Prozessor 6 möglich, digitale Daten direkt an die Bedien und Darstellungseinrichtung 12 zu versenden. Dies ist insbesondere für die Darstellung von Daten, wie z.B. Text oder Bildern, von Vorteil. Damit können Daten, wie Multimediadaten, an die Bedien- und Darstellungseinrichtung 12 übergeben werden, so daß die Bedien- und Darstellungseinrichtung die Daten dekodiert und mittels eines angeschlossenen Lautsprechers 13 und eines angeschlossenen Monitors 14 dann wie gewünscht darstellt.

Der Datenstrom, der vom Steuerelement 5 am Multiplexer 9 ausgewählt wird, wird im Digital-Analog-Wandler zu analogen Signalen umgewandelt, die dann über einen Analogausgang der Vorrichtung 1 an die Bedien- und Darstellungseinrichtung 12 gehen, so daß die Audiodaten dann mittels des Lautsprechers 13 dargestellt werden. Zur Darstellung mittels des Lautsprechers 13 und/oder des Monitors 14 weist die Bedien- und Darstellungseinrichtung 12 Signalverarbeitungseinrichtungen auf.

Das Netzteil 10 erhält vom abgesetzten Generator 11 über einen Leistungseingang elektrische Energie, wobei das Netzteil 10 die Spannung für die Funktionsblöcke der Vorrichtung 1 heruntersetzt. Das Netzteil 10 versorgt alle Funktionsblöcke der Vorrichtung 1.

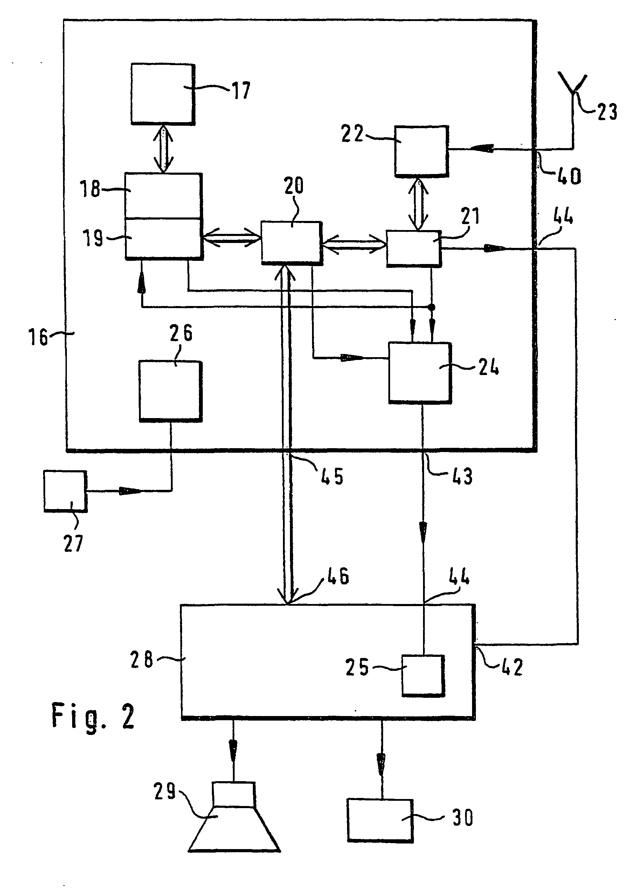

In der Figur 2 ist eine Vorrichtung mit einem CD-Wechsler und Rundfunkempfänger dargestellt. Die Vorrichtung 16 weist ein CD-Magazin 17, ein CD-Laufwerk 18, eine CD-Laufwerksteuerung 19, ein Steuerelement 20, einen Prozessor 21, ein Hochfrequenzempfangsteil 22, einen Multiplexer 24, einen Digital-Analog-Wandler 25 und ein Netzteil 26 auf.

Das Hochfrequenzempfangsteil 22 erhält die empfangenen digitalen Rundfunksignal von einer Antenne 23. Die Antenne 23 ist über einen Hochfrequenzeingang 40 der Vorrichtung 16 an das Hochfrequenzteil angeschlossen. Das Hochfrequenzempfangsteil 22 verstärkt die empfangenen Rundfunksignale, setzt sie in eine niedrigere Zwischenfrequenz um und führt eine Digitalisierung durch. Der so entstandene digitale Datenstrom wird vom Hochfrequenzempfangsteil 22 über einen Datenausgang an einen ersten Dateneingang des Prozessors 21 übergeben. Alternativ wird vom Hochfrequenzempfangsteil 22 ein in eine Zwischenfrequenz umgesetztes, analoges Signal an den Prozessor 21 übertragen, der dann die Digitalisierung durchführt, wobei ein Analog-Digital-Wandler ein an den Prozessor 21 angeschlossenes Element ist.

Über seinen ersten Datenausgang ist der Prozessor 21 mit dem Hochfrequenzteil 22 verbunden, wobei er mittels dieser Verbindung der Empfangsfrequenzbereich des Hochfrequenzempfangsteils 22 bestimmt.

Da in den empfangenen digitalen Rundfunksignalen auch Daten für z.B. Multimediadarstellungen vorhanden sind, werden diese Daten von dem Prozessor 21 aus dem Datenstrom entnommen und über einen zweiten Datenausgang des Prozessors 21 über einen Digitalausgang 41 der Vorrichtung 16 an einen Digitaleingang 42 der Bedien- und Darstellungseinrichtung 28 übergeben. Die Bedien- und Darstellungseinrichtung 28 dekodiert die Daten und stellt sie dann mittels eines Lautsprechers 29 und/oder eines Monitors 30 dar.

Über seinen dritten Datenausgang führt der Prozessor 21 den aus den Rundfunksignalen ermittelten Datenstrom an einen ersten Dateneingang eines Multiplexers 24. Weiterhin ist der Prozessor 21 mit einem Steuerelement 20 verbunden, wobei das Steuerelement 20 dem Prozessor 21 mitteilt, welche Empfangsfrequenz einzustellen ist, und der Prozessor 21 dem Steuerelement 20 mitteilt, welchen Sender er eingestellt hat.

Das Steuerelement 20 ist an einen Steuereingang des Multiplexers 24 angeschlossen, wobei dieser Steuereingang dazu dient, einen Dateneingang auszuwählen, wobei dann die Daten, die an dem freigeschalteten Eingang des Multiplexers 24 anliegen, durch den Digital-Analog-Wandler 25 in der Bedien- und Darstellungseinrichtung 28 in analoge Signale umgewandelt werden. An den zweiten Dateneingang des Multiplexers 24 ist der Datenausgang der CD-Laufwerksteuerung 19 angeschlossen. Über diesen Datenausgang der CD-Laufwerksteuerung 19 werden die Daten, die durch das Lesen der CD ermittelt wurden, versandt.

Der Ausgang des Multiplexers 24 führt zu einem Digitalausgang 43 der Vorrichtung 16. Der Digitalausgang 16 ist an den Digitaleingang 44 der Bedien- und Darstellungseinrichtung 28 angeschlossen. Eine Leitung führt von dem Digitaleingang 44 zu dem Digital-Analog-Wandler 25. Der Analogausgang des DigitalAnalog-Wandlers 25 ist an Mittel zur Signalverabeitung der Bedien- und Darstellungseinrichtung 28 angeschlossen, so daß aus den analogen Signale die Audiosignale erzeugt werden. Über diese Verbindung werden also die Audiosignale an die Bedien- und Darstellungseinrichtung 28 übergeben, um dann mittels des Lautsprechers 29 dargestellt zu werden.

Das Steuerelement 20 ist über einen Datenein- und -ausgang 45 mit einem Datenein-ausgang 46 der Bedien- und Darstellungseinrichtung 28 verbunden. Über diese Verbindung, die auch als Steuerbus ausgeführt sein kann, werden Steuerinformationen übertragen, zum Beispiel welche CD oder welchen Sender der Benutzer mittels Eingabe an der Bedien- und Darstellungseinrichtung 28 hat oder welche CD gerade im Laufwerk 18 der Vorrichtung 16 ist. Das Steuerelement 20 ist daher auch mit der CD-Laufwerksteuerung 19 verbunden, um Angaben über die Auswahl einer CD und das Abspielen dieser der CD-Laufwerksteuerung 19 zu übergeben. Die CD-Laufwerksteuerung 19 ist mit dem CD-Laufwerk 18 verbunden. Damit wird das Abspielen der CDs von der CD-Laufwerksteuerung 19 gesteuert. Darüber hinaus ist die CD-Laufwerksteuerung 19 über einen Dateneingang mit dem dritten Datenausgang des Prozessors 21 verbunden, so daß Rundfunksignale auf eine CD, die sich im CD-Laufwerk 18 befindet, geschrieben werden können. Ein Netzteil 26 versorgt die in der Vorrichtung 16 genannten Funktionsblöcke mit elektrischer Energie, wobei das Netzteil 26 an einen Generator 27 über einen Leistungseingang der Vorrichtung 16 angeschlossen ist.

Neben der Verwendung von CDs ist auch die Verwendung von Minidiscs oder anderen digitalen Tonträgern möglich. Neben dem Empfang von DAB als digitalen Rundfunksignalen ist auch der Empfang von anderen digitalen Rundfunksignalen, die z.B. Mittels DVB (Digital Video Broadcasting) oder DRM (Digital Radio Mondial) übertragen werden. Diese beiden Rundfunkübertragungsverfahren sind in der Modulation dem DAB ähnlich, sie verwenden auch das OFDM, aber sie weisen eine andere Rahmenstruktur, andere Frequenzbereiche und eine andere Übertragungsrate auf.

In einer Weiterbildung der Erfindung kann vorgehene werden, daß das Steuerelement (5) und der Prozessor (6) zu einem Prozessor zusammengefaßt werden.

Die Multimediadaten, die die Vorrichtung der Bedien- und Darstellungseinrichtung überträgt, sind programmbegleitende Texte und Bilder, zum Beispiel JPEG-codiert, ein MPEGcodierter Video-Datenstrom mit Audio, was auch als DMB (Digital Multimedia Broadcasting) bei DAB bekannt ist, oder als eine Broadcast Webseite mit HTML (Hyper Text Markup Language)-Seiten. Die Möglichkeiten der Art und/oder Codierung der Multimediadaten sind auf diese Beispiele nicht begrenzt.

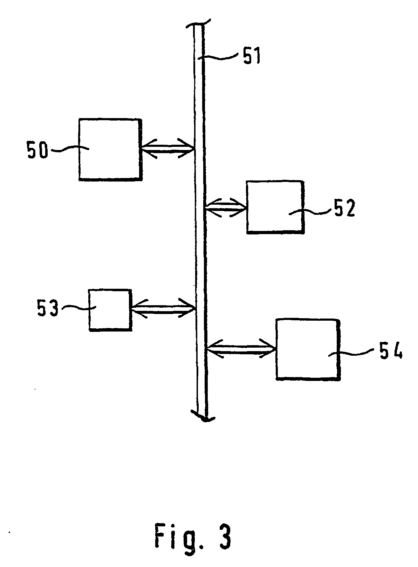

In Figur 3 ist eine erfindungsgemäße Vorrichtung 50 dargestellt, die an einen Bus 51 angeschlossen ist. Dieser Bus ermöglicht den Datenaustausch mit anderen Vorrichtungen, die ebenfalls an diesen Bus 51 angeschlossen sind. Zu diesen Vorrichtungen zählen die oben erwähnte Bedien- und Darstellungseinrichtung 52, aber auch ein Navigationsgerät 53 oder eine GSM (Global System for Mobile Communications)-Sende-/Empfangsstation 54. Neben dem GSM-Standard sind weitere Mobilstandards einsetzbar. Die GSM-Sende-/Empfangsstation 54 erlaubt den gezielten Abruf von externen Datenanbietern, die im Zusammenhang mit den mittels DAB-Signalen empfangenen Daten genutzt werden. Ein Beispiel ist hierfür der Abruf eines Schlüssels zum Entschlüsseln von mittels DAB-Signalen empfangenen, verschlüsselten Daten. Weitere Geräte mit anderen Funktionalitäten sind anschließbar.

Die Bedien- und Darstellungseinrichtung 52, das Navigationsgerät 53 und die GSM-Sende-/Empfangsstation 54 erhalten von der erfindungsgemäßen Vorrichtung Nutzdaten, die diese Geräte mittels Steuerdaten über den Bus 51 von der Vorrichtung 50 abrufen. Die erfindungsgemäße Vorrichtung 50 und alle anderen Geräte, die an den Bus 51 angeschlossen sind, weisen einen Baustein auf, der Daten über den Bus 51 versendet und empfängt. Dieser Baustein kennzeichnet die Daten, ob es sich um Nutzdaten oder Steuerdaten handelt.

## Patentansprüche

1. Vorrichtung zur Wiedergabe mit einem digitalen Tonträger und zum Empfang von digitalen Rundfunksignalen, wobei die Vorrichtung (1) ein Magazin (2) zur Bevorratung von wenigstens einem digitalen Tonträger aufweist, wobei bei Betrieb der Vorrichtung (1) diese einen digitalen Tonträger aus dem Magazin (2) in ein Laufwerk (3) transportiert, um den digitalen Tonträger zu lesen, wobei eine Laufwerksteuerung (4) das Lesen und Beschreiben des digitalen Tonträgers steuert, wobei ein Steuerelement (5) die Laufwerksteuerung (4) und einen Prozessor (6) mittels Daten von einer an die Vorrichtung (1) angeschlossenen Bedien- und Darstellungseinrichtung (12) steuert, daß der Prozessor (6) die digitalen Rundfunksignale von einem Empfangsteil (7) erhält und die digitalen Rundfunksignalen decodiert, **dadurch gekennzeichnet, dass** das Steuerelement (5) mittels eines Multiplexers (9) durch die Daten von der Bedien- und Darstellungseinrichtung (12) entscheidet, ob ein digitaler Datenstrom von der Laufwerksteuerung (4) oder von dem Prozessor (6) in einem Digital-Analog-Wandler (15) in analoge Signale umgesetzt wird, wobei die Bedien- und Darstellungseinrichtung (12) die analogen Signale weiterverarbeitet und darstellt, und dass die Vorrichtung in einem Gehäuse untergebracht ist.

2. Vorrichtung nach Anspruch 1, **dadurch gekennzeichnet, daß** sich der Digital-Analog-Wandler (15) in der Vorrichtung (1) befindet.

3. Vorrichtung nach Anspruch 1, **dadurch gekennzeichnet, daß** sich der Digital-Analog-Wandler (25) in der Bedien- und Darstellungseinrichtung (28) befindet.

4. Vorrichtung nach Anspruch 2 oder 3, **dadurch gekennzeichnet, daß** der Prozessor (6) der Laufwerksteuerung (4) einen digitalen Datenstrom sendet, so daß die Laufwerksteuerung (4) den digitalen Tonträger im Laufwerk (3) mittels des digitalen Datenstroms beschreibt.

5. Vorrichtung nach Anspruch 2 oder 3, **dadurch gekennzeichnet, daß** der Prozessor (6) den digitalen Datenstrom zu der Bedien- und Darstellungseinrichtung (12) versendet, damit die Bedien- und Darstellungseinrichtung (12) den digitalen Datenstrom vorzugsweise für Multimediaanwendungen weiterverarbeitet.

6. Vorrichtung nach Anspruch 2 oder 3, **dadurch gekennzeichnet, daß** ein Netzteil (10) die Vorrichtung (1) mit elektrischer Energie versorgt, wobei ein von der Vorrichtung (1) abgesetzter Generator (11) das Netzteil (10) versorgt.

7. Vorrichtung nach Anspruch 2 oder 3, **dadurch gekennzeichnet, daß** der Prozessor (6) das Empfangsteil (7) bezüglich eines Empfangsfrequenzbereichs steuert, wobei der Prozessor (6) Daten bezüglich des Empfangsfrequenzbereichs von dem Steuerelement (5) erhält, wobei das Steuerelement (5) diese Daten von der Bedien- und Darstellungseinrichtung (12) erhält.

8. Vorrichtung nach einem der vorhergehenden Ansprüche, **dadurch gekennzeichnet, daß** die Vorrichtung (50) an einen Bus (51) angeschlossen ist.

## Claims

1. Apparatus for reproduction using a digital sound carrier and for receiving digital broadcast radio signals, where the apparatus (1) has a magazine (2) for holding at least one digital sound carrier, where during operation of the apparatus (1) the apparatus transports a digital sound carrier from the magazine (2) to a drive (3) in order to read the digital sound carrier, where a drive controller (4) controls the reading and writing of information from and to the digital sound carrier, where a control element (5) controls the drive controller (4) and a processor (6) using data from an operating and display device (12) connected to the apparatus (1), where the processor (6) receives the digital broadcast radio signals from a reception part (7) and decodes the digital broadcast radio signals, **characterized in that** the control element (5) uses the data from the operating and display device (12) to decide, by means of a multiplexer (9), whether a digital data stream from the drive controller (4) or from the processor (6) is converted into analogue signals in a digital-analogue converter (15), with the operating and display device (12) processing the analogue signals further and displaying them, and **in that** the apparatus is accommodated in a housing.

2. Apparatus according to Claim 1, **characterized in that** the digital-analogue converter (15) is located in the apparatus (1).

3. Apparatus according to Claim 1, **characterized in that** the digital-analogue converter (25) is located in the operating and display device (28).

4. Apparatus according to Claim 2 or 3, **characterized in that** the processor (6) sends the drive controller (4) a digital data stream, so that the drive controller (4) writes information to the digital sound carrier in the drive (3) using the digital data stream.

5. Apparatus according to Claim 2 or 3, **characterized in that** the processor (6) sends the digital data stream to the operating and display device (12) so that the operating and display device (12) processes the digital data stream further, preferably for multimedia applications.

6. Apparatus according to Claim 2 or 3, **characterized in that** a power supply unit (10) supplies the apparatus (1) with electric power, the power supply unit (10) being supplied with power by a generator (11) which is remote from the apparatus (1).

7. Apparatus according to Claim 2 or 3, **characterized in that** the processor (6) controls the reception part (7) for a reception frequency range, the processor (6) receiving data relating to the reception frequency range from the control element (5), with the control element (5) receiving these data from the operating and display device (12).

8. Apparatus according to one of the preceding claims, **characterized in that** the apparatus (50) is connected to a bus (51).

## Revendications

1. Dispositif destiné à la reproduction à partir d'un support numérique de son et à la réception de signaux radio numériques, le dispositif (1) comportant un magasin (2) pour stocker au moins un support numérique de son, le dispositif (1) en fonctionnement transportant un support numérique de son depuis le magasin (2) jusque dans un lecteur (3) afin de lire le support numérique de son, un pilote de lecteur (4) commandant la lecture et l'écriture sur le support numérique de son, à l'aide d'un élément de commande (5) qui commande le pilote de lecteur (4) et un processeur (6) à l'aide de données provenant d'une installation de commande et d'affichage (12) raccordée au dispositif (1) de telle manière que le processeur (6) obtient les signaux radio numériques d'un bloc de réception (7) et décode les signaux radio numériques,
**caractérisé en ce qu'**
à partir des données provenant de l'installation de commande et d'affichage (12), l'élément de commande (5) établit à l'aide d'un multiplexeur (9) si un flux de données numériques est transformé en signaux analogiques dans un convertisseur analogique-numérique (15) par le pilote de lecteur (4) ou par le processeur (6), l'installation de commande et d'affichage (12) continuant alors de traiter et représenter les signaux analogiques, et le dispositif est placé dans un boîtier.

2. Dispositif selon la revendication 1,
**caractérisé en ce que**
le convertisseur analogique-numérique (15) se trouve dans le dispositif (1).

3. Dispositif selon la revendication 1,
**caractérisé en ce que**
le convertisseur analogique-numérique (15) se trouve dans l'installation de commande et d'affichage (12).

4. Dispositif selon la revendication 2 ou 3,
**caractérisé en ce que**
le processeur (6) du pilote de lecteur (4) envoie un flux de données numériques, de sorte que le pilote de lecteur (4) écrit sur le support numérique de son placé dans le lecteur (3) grâce au flux de données numériques.

5. Dispositif selon la revendication 2 ou 3,
**caractérisé en ce que**
le processeur (6) envoie le flux de données numériques à l'installation de commande et d'affichage (12) pour que l'installation de commande et d'affichage (12) continue de traiter le flux de données numériques, de préférence pour des applications multimédia.

6. Dispositif selon la revendication 2 ou 3,
**caractérisé en ce qu'**
un bloc d'alimentation (10) alimente le dispositif (1) en énergie électrique, le bloc d'alimentation (10) étant alimenté par un générateur (11) en dehors du dispositif (1).

7. Dispositif selon la revendication 2 ou 3,
**caractérisé en ce que**
le processeur (6) commande le bloc de réception (7) pour ce qui est d'une gamme de fréquences de réception, l'élément de commande (5) fournit alors au processeur (6) des données concernant la gamme de fréquences de réception et l'installation de commande et d'affichage (12) fournit ces données à l'élément de commande (5).

8. Dispositif selon l'une des revendications précédentes,
**caractérisé en ce que**
le dispositif (50) est raccordé à un bus (51).
